# EUROPEAN PATENT APPLICATION

(11) **EP 4 607 886 A1**
(43) Date of publication of application: **27.08.2025**
(21) Application number: 25158299.5
(22) Date of filing: 17.02.2025
(51) Int. Cl.: H04L 61/251, H04L 61/2517, H04L 45/76

(54) **BIDIRECTIONAL PLATFORM FOR PROVIDING MULTI-TENANT SERVICES TO PRIVATE CUSTOMER ENDPOINTS**

(30) Priority: 21.02.2024 US 202418583434
(71) Applicant: Microsoft Technology Licensing, LLC, Redmond, WA 98052 (US)
(72) Inventor: NANDOORI, Ashok, Redmond, 98052 (US); TEWARI, Rishabh, Redmond, 98052 (US); TIWARI, Abhishek K., Redmond, 98052 (US); KUMAR, Abhijeet, Redmond, 98052 (US); BANSAL, Deepak, Redmond, 98052 (US); JAIN, Sachin, Redmond, 98052 (US); SHRIVASTAVA, Pranjal, Redmond, 98052 (US); UPADHYAY, Alok, Redmond, 98052 (US); YAP, Sam Kian Fong, Redmond, 98052 (US)
(74) Representative: CMS Cameron McKenna Nabarro Olswang LLP

(57) **Abstract**

A disclosed method facilitates bidirectional traffic flows between a multi-tenant service and endpoints with private customer internet protocol (IP) addresses. The method provides for receiving a data packet having a data packet header identifying a first IPv6 address as a destination. The first IPv6 address embeds a first IPv4 address and a virtual network (VNet) identifier uniquely identifying a VNet of a cloud compute platform. The method further provides for routing the data packet to a host node within the cloud compute platform that hosts a virtual machine (VM) within the VNet identified by the VNet identifier and assigned to the first IPv4 address.

## Description

### Background

Cloud compute services provides scalable resources that businesses can access on demand and over the internet, including compute, storage, platform, and application services. Platform as a Service (PaaS) is a cloud computing deployment model that provides a scalable environment for customers to develop, test, deliver, and managing software application using virtual machines (VMs) that are both provisioned and managed by a cloud service provider. Within this framework, it is common for customers to configure networks of virtual machines (VMs) using private IP address spaces. For example, a customer designates a range of private IP addresses to use for a virtual network (VNet), and a cloud PaaS provider assigns addresses from that customer-designated range to each new VM that is provisioned within the VNet. One consequence of this practice is that it is possible for multiple different customer VNets hosted on the same cloud platform to have overlapping ranges of IP addresses. This creates challenges in facilitating communications between different customer VNets and multi-tenant cloud services.

### Summary

According to one implementation, a cloud compute platform disclosed herein includes platform routing components configured to receive a data packet having a data packet header identifying a first IPv6 address as a destination. The first IPv6 address embeds a first IPv4 address and a virtual network (VNet) identifier uniquely identifying a VNet of a cloud compute platform. Based on the extraction of the VNet identifier and first IPv4 address from the IPv6 address, the data packet is routed to a host node within the cloud compute platform that hosts a first virtual machine (VM) that is reachable via the first IPv4 address and within the VNet identified by the VNet identifier.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### Brief Description of the Drawings

FIG. 1 illustrates an example cloud compute platform that supports bidirectional communications between a multi-tenant service and customer endpoints that include private IP addresses.
FIG. 2A illustrates aspects of an example cloud compute platform that supports bidirectional communications between endpoints in different virtual networks that may utilize private internet protocol (IP) addresses.
FIG. 2B illustrates additional aspects of the cloud compute platform shown in FIG. 2A.
FIG. 3 illustrates example operations performed to support a bidirectional traffic flow between private customer endpoints in a cloud compute platform and a multi-tenant service.
FIG 4A illustrates example operations performed to facilitate a traffic flow from an IPV6 address corresponding to an endpoint of a multi-tenant service and an IPv4 address corresponding to a virtual machine of private virtual network.
FIG 4B illustrates example operations performed in response to the operations 400 of FIG. 4A in support of a return traffic flow.
FIG. 5 illustrates an example schematic of a processing device suitable for implementing aspects of the disclosed technology.

### Detailed Description

There are two common models that support delivery of Software as a Service (SaaS) products to end customers: single-tenant and multi-tenant. In a single tenant SaaS delivery model, each customer to a SaaS product is provided with a distinct software instance running on infrastructure that is not shared with other users. In a multi-tenant SaaS delivery model, cloud infrastructure is shared among multiple customers or accounts. Multi-tenant delivery models are often preferred since they can be offered at lower cost due to efficiencies realized from shared resource utilization.

When a SaaS product is configured per the multi-tenant model to deliver services to different customers with virtual networks (VNets) configured by a same PaaS provider, it is possible that a single instance of a SaaS service will be requested by multiple customers with VNets characterized by overlapping ranges of private IP addresses. These conflicting private IP addresses create communication challenges that are presently addressed by various workarounds including (1) the SaaS provider may simply require the customer to utilize public IP addresses; or (2) the SaaS provider can create a virtual machine commonly referred to as a "jumpbox VM" within the VNet of the end customer that acts as a service-controlled endpoint that performs routing functions on behalf of the multi-tenant SaaS service. The first solution is sub-optimal because the use of public IP addresses can create extra overhead and cost for the end customer (e.g., to configure additional VMs with public IPs). The second solution is also sub-optimal because it depends upon the injection of an additional VM within every customer network for the sole purpose of routing. This is an enormous waste of hardware and processing resources given the large number of private virtual networks may be configured to communicate in this way with a given multi-tenant solution. In addition to consuming valuable resources, each jumpbox VM adds an extra "hop" to the route each packet traverses between a customer-managed endpoint and the SaaS endpoint, which can act as a traffic chokepoint and therefore introduce latency and impede VNet bandwidth.

Notably, some existing cloud service platforms do offer architectures that can be leveraged to support limited types of bidirectional communications between multi-tenant services and customer VMs with private IP. However, these architectures depend upon customer-side configurations (e.g., the customer performs some configuration action to initiate a communication to a multi-tenant service) and do not support communications initiated on the service-provider side.

The herein disclosed technology includes a solution that allows a multi-tenant service to initiate bidirectional communications with different VNets characterized by overlapping ranges of private IP addresses without the need to provision a service-controlled jumpbox VM (e.g., a VM controlled by the multi-tenant service) within the VNet of each customer using private IP address(es) to communicate with the multi-tenant service.

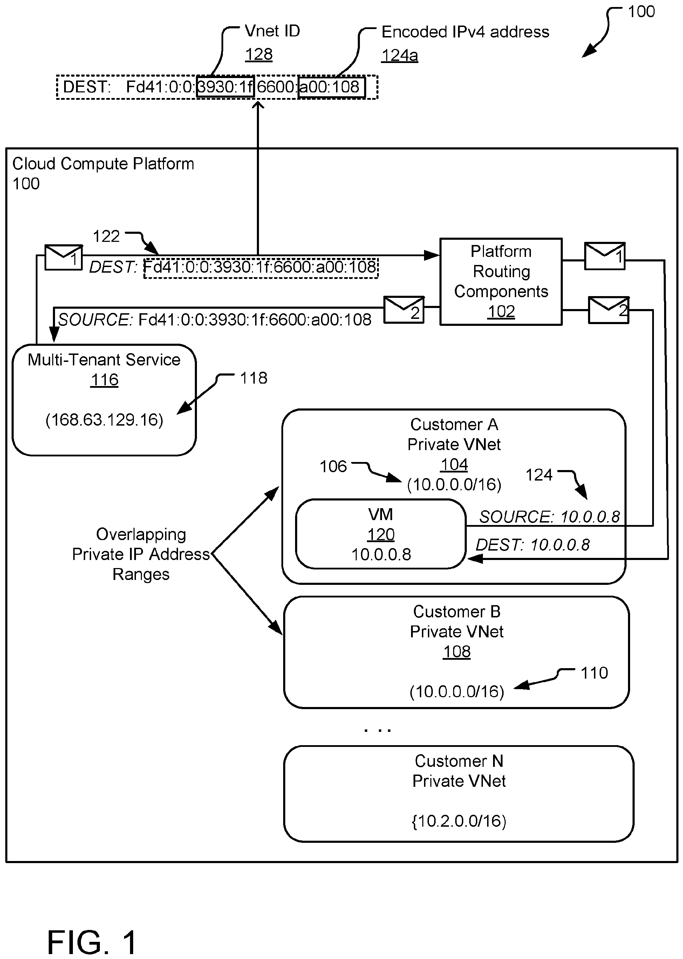

FIG. 1 illustrates an example cloud compute platform 100 that supports bidirectional and service-initiated communications between a multi-tenant service 116 and customer endpoints that include private IP addresses. The cloud compute platform 100 offers various cloud compute services such as infrastructure as a service (IaaS), platform as a service (PaaS) and/or software as a service (SaaS) to subscribing customers, eliminating the needs for those customers to host these services on-site in their own data centers. Although the exact nature of cloud compute services provided by the cloud compute platform 100 may vary in different implementations, these services generally include at least the provisioning of virtual networks (VNets) on behalf of different customers. Each VNet provisioned by the cloud compute platform 100 includes one or more virtual machines (VMs), and each VM is hosted on a respective server node, also referred to herein as a "host node" that is managed by a cloud service provider that operates the cloud compute platform 100.

In one implementation, the cloud compute platform 100 includes a control plane that customers can interact with (e.g., through a web-based portal) to request provisioning and configuration virtual networks and of individual VMs within each virtual network. The control plane of the cloud compute platform 100 includes a configuration option that allows a customer to optionally designates a block of private IP addresses for assignment to VMs within the customer's VNet. As used herein, the term "private IP address" refers to an address that is not allocated to any specific organization and that may be used by anyone without approval from regional or local internet registries. Data packets originating from or addressed to a private IP address cannot be routed through the public internet. For this reason, private IP addresses are commonly used within private networks used for local area networks (LANs) in residential, office, and enterprise environments.

The cloud compute platform 100 illustrates a first private VNet 104 configured on behalf of a Customer A that is shown to be associated with a private address range 106 (e.g., "10.0.0.0/16," which is a common notation used to refer to a block of addresses including 10.0.0.1 through 10.0.255.254). The private address range 106 is, in one implementation, a customer-designate range. For example, a customer requesting configuration of the first private VNet 104 specifies the private address range 106 and the cloud compute platform 100 selects an address from this range to assign each new VM that it provisions within the first private VNet 104. Because the private address range 106 is customer-designated, it is possible for another customer to configuration a VNet with the same or an overlapping range of private IP addresses. As an example of this, the cloud compute platform 100 is shown to include a second private VNet 108 configured on behalf of Customer B that is assigned to a private address range 110 that is identical to the private address range 106 of the first private VNet 104.

In addition to hosting various private VNets, the cloud compute platform 100 is also shown hosting a multi-tenant service 116, which can be understood as including one or multiple VMs of another (second) VNet. The VNet of the multi-tenant service 116 differs from the first private VNet 104 in that it includes endpoints reachable via one or more public (e.g., internet-facing) IP addresses (e.g., a public IP address 118).

Due to a variety of circumstances, some customers may to utilize a VM with a private IP address to subscribe to a publicly-offered multi-tenant service. Depending on the nature of service being subscribed to, fulfillment of the service may require or otherwise benefit from the capability of the multi-tenant service to initiate future communications with the customer's VM at the private IP address. For example, the multi-tenant service may be a data processing service that, when subscribed to, processes customer data residing on the customer's private VNet on a periodic (e.g., automatically recurring) basis, such as to provide the customer with a requested data analysis product or report. In these and other types of scenarios, it is procedurally beneficial for the multi-tenant service to have the capability of self-initiating a communication with the subscribing customer.

In the system of FIG. 1 where different customer VNets can have identical or overlapping ranges of private IP addresses, a communication initiated by the multi-tenant service 116 cannot be routed to the private customer VNets 104 and 106 (with non-unique private addresses) without specially-configured routing logic and/or components. Unlike current systems that address this challenge by provisioning service-controlled VMs (jumpbox VMs) within each customer VNet, the cloud compute platform 100 provide a unique, low-overhead solution that entails platform-level assignment of IPv6 addresses to all VMs with private (e.g., IPv4) addresses and stateful address translation between private IPv4 addresses (which may be redundantly used in different VNets) and IPv6 addresses which are guaranteed to be unique within the cloud compute platform 100.

In the illustrated example, it is assumed that Customer A has previously performed actions to configure a VM 120 within the private VNet 104 to be reachable by the multi-tenant service 116. For example, Customer A interacts with a control plane of the cloud compute platform 100 to grant a content delivery agent of the cloud compute platform 100 access to the VM 120. Using the control plane, a customer can view and select information pertaining to various multi-tenant services that have registered with the cloud compute platform 200. Customer A selects an option to subscribe to a particular service offering of the multi-tenant service 116 and is then directed, by the control plane, to another interface that requests certain one-time configuration information that is requested or needed by the multi-tenant service 100 to finalize the subscription.

Following this exchange, the control plane of the multi-tenant service 116 assigns the VM 120 in the private VNet 104 an IPv6 address 122 that is globally unique within the cloud compute platform 100. The platform control plane associates the platform-assigned IPv6 address 122 with a customer identifier (e.g., identifying Customer A and/or the Private VNet 104) and the private address (e.g., an IPv4 address 124) of the VM 120. In the disclosed solution, it is this platform-assigned IPv6 address 122 that is registered for the VM 120 with the multi-tenant service 116 instead of the IPv4 address 124.

Following assignment of the IPv6 address 122 to the VM 120, the control plane of the cloud compute platform 100 performs one-time platform routing component configuration operations without involvement of the multi-tenant service 116 or the VMs of the first private VNet 104. These one-time configuration operations enable platform routing components 102 to perform routing and address translation operations that allow the multi-tenant service 116 to communicate with the VM 120 using the platform-assigned IPv6 address 122 without reconfiguring any aspect of the private VNet 104 (e.g., the VMs of the private VNet 104 still communicate using their respective IPv4 private addresses).

Following this configuration, each service-initiated exchange between the multi-tenant service 116 and the VM 120 has the characteristics exemplified in FIG. 1. Specifically, the multi-tenant service 116 transmits data (e.g., message '1') to the VM 120 in the form of data packets, and each data packet outbound from the multi-tenant service 116 includes a packet header identifying the IPv6 address 122 of the VM 120 as the packet destination. The platform routing components 102 extract certain information from the IPv6 address 122 to identify the appropriate host node (e.g., physical server) and route the message to that host node. The platform routing components 102 also perform address translation (e.g., either internal or external to the host node of the VM 120) such that the data packet actually received by the VM 120 includes a packet header identifying the IPv4 address 124 of the VM 120 as the destination.

When the VM 120 transmits a return message (e.g., message '2'), the outbound message includes a packet header identifying the source of the packet as the IPv4 address 124. The platform routing components use the IPv4 address 124 and other information to reconstruct/retrieve the corresponding IPv6 address 122 such that the return data packet received at the multi-tenant service (e.g., message '2') identifies the IPv6 address 122 as the packet source.

In one implementation, the above-described bidirectional translation of the IPv6 address 122 and the IPv4 address 124 is made possible due to unique destination-identifying information that is included within the IPv6 address 122. By design, the IPv6 address 122 encodes a VNet identifier 128 that uniquely identifies the first private VNet 104 within the cloud compute platform 100. The IPv6 address 122 also encodes the IPv4 address 124 of the VM 120 (as shown by encoded IPv4 address 124a). Thus, the platform routing components 102 perform the illustrated address translation, in part, by extracting the first private VNet 104 and IPv6 address 124 from the IPv6 address 122 and also by defining and storing a stateful address translation rule that permits reconstruction of the IPv6 address 122 for the return traffic.

In one implementation, the forgoing is achieved without changes to the private VNet 104 (e.g., without informing the private VNet 104 of the existence of the IPv6 address 122 that is assigned to the VM 120). Likewise, the illustrated exchange is supported without storage or utilization of the private IPv4 address 124 by the multi-tenant service 116.

Different implementations may utilize different formats/protocols for embedding the above-described information in the platform-assigned IPv6 address 122. In one suitable protocol, the IPv6 address 122 includes a reserved 2-byte prefix ("Fd41"), followed by a 4-byte Source Network Address Translation (SNAT) virtual IP address (VIP) (e.g., "0:0"), followed by 4-bytes including the VNet identifier 128 (e.g., a region identifier and VNet identifier that is unique within the region, "3930:1F"), two-bytes storing a subnet identifier (e.g., "6600"), and four bytes storing the IPv4 address 124. In the illustrated example, the entirety of the IPv6 address 122 is encoded upon departure from the multi-tenant service 116 and decoded as-needed (e.g., each time the destination address is read) by select components of the platform routing components 102.

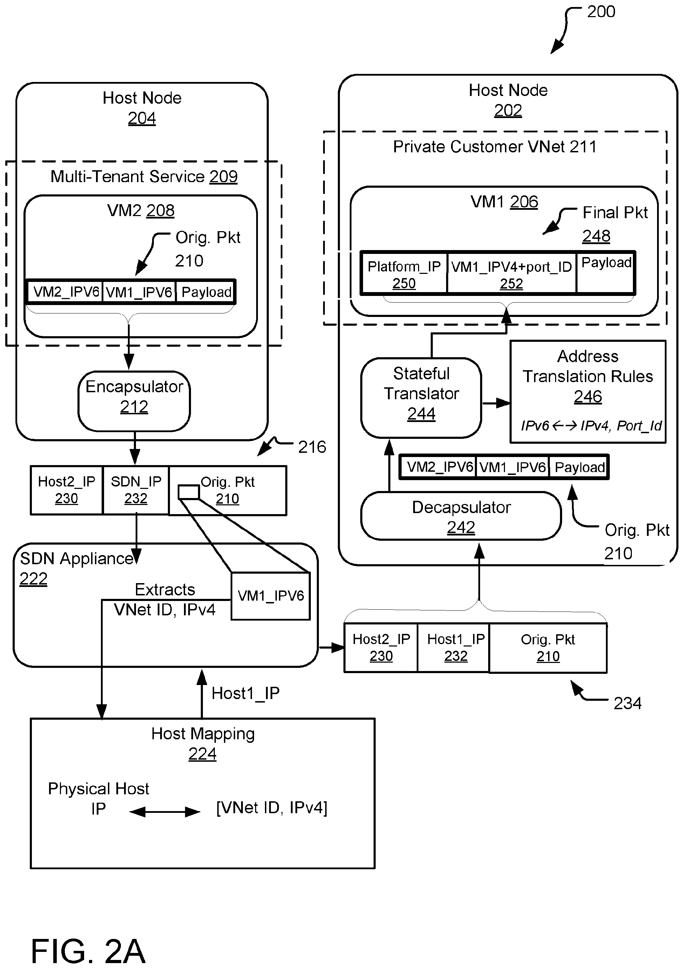

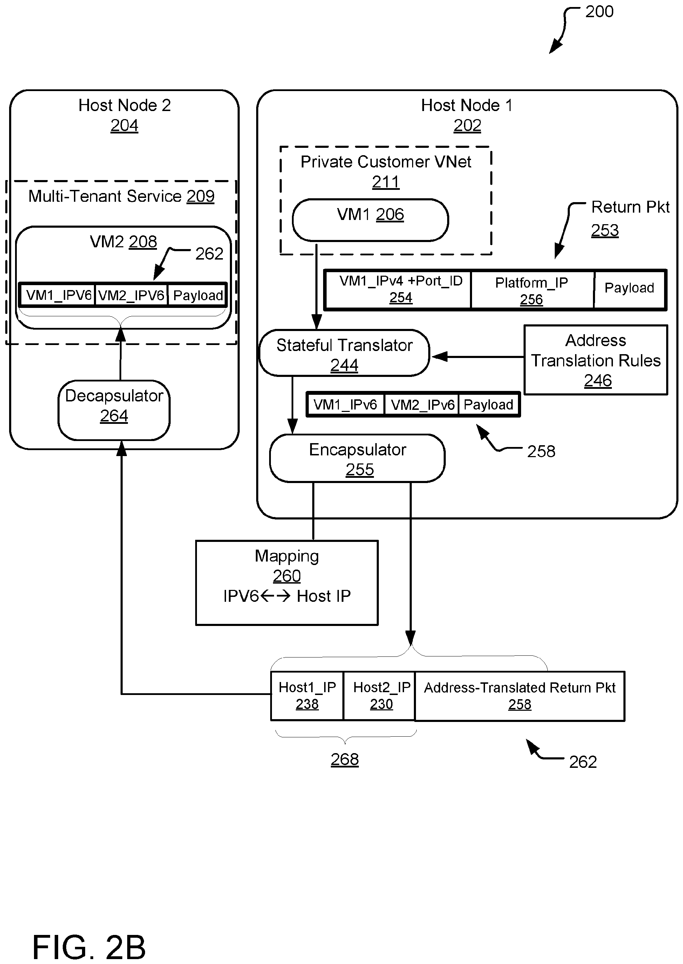

For simplification of concept, FIG. 1 illustrates the above-described address translation for the customer endpoints only (e.g., the IPv6 and IPv4 addresses of the VM 120). In one implementation, however, some address translation is also performed with respect to the IP addresses used by each VM within the multi-tenant service 116. In the disclosed implementations, the multi-tenant service 116 receives traffic at IPv6 addresses. Thus, VMs of the multi-tenant service 116 receive and send data packets that include IPv6 addresses in both source and destination header fields while the VMs in the private customer VNet 104 receive and send data packets that include IPv4 addresses in both source and destination header fields. Further details of the address translation performed with respect to the address of the multi-tenant service 116 are exemplified with respect to FIG. 2A and 2B.

FIG. 2A illustrates aspects of another example cloud compute platform 200 that support service-initiated bidirectional communications between multi-tenant services and customer VMs that utilize private IP addresses. The cloud compute platform 200 operates one or more data centers including physical servers, referred to herein as "host nodes" that includes the hardware and software resources allocated to various VMs provisioned on behalf of different customers.

By example, FIG. 2A and 2B illustrate communications between VMs on a host node 202 and another host node 204. In the illustrated example, the host node 202 is host to a first VM 206 that is, in one implementation, one of many virtual machines in a private customer VNet 211 that has been configured by the cloud compute platform 200 on behalf of a first customer. Although FIG. 2 does not illustrate the other VMs of the private virtual network, these VMs can be understood as residing either on the host node 202 or on other respective host nodes of the cloud compute platform 200, with each VM in the private customer VNet 211 being assigned to a select private IPv4 address from a block of private IPv4 addresses.

The IPv4 address of the first VM 206 is referenced throughout FIG. 2A and 2B as "VM1_IPv4." Since the first VM 206 is configured as a IPv4 endpoint, it is configured to communicate with other IPv4 addresses. Each data packet received by the first VM 206 includes a data packet header that identifies the VM1_IPv4 address as a destination for the data packet. Likewise, the data packet header of each data packet transmitted by the first VM 206 identifies the VM1_IPv4 address as a transmission source for the data packet.

The host node 204 acts as host to a second VM 208 that is configured as an endpoint of a multi-tenant service 209. In one implementation, various different private VNet endpoints within the cloud compute platform 200 subscribe to the multi-tenant service 209 and communicate with select VMs of the multi-tenant service in a same or similar manner as that described below with respect to communications between the first VM 206 and the second VM 208. Specific aspects of the multi-tenant service 209 or the cloud compute platform 200 not described with respect to FIG. 2 may be assumed the same or similar to like-named components of FIG. 1.

The second VM 208 has an IPv6 address - referred to throughout FIG. 2A and 2B as "VM2_IPv6", and the second VM 208 is therefore configured to communicate with other IPv6 addresses. Each data packet received by the second VM 208 includes a data packet header that identifies the VM2_IPv6 address as a destination for the data packet. Likewise, the data packet header of each data packet transmitted by the second VM 208 identifies the VM2_IPv6 address as a transmission source for the data packet.

Due to routing and stateful address translation actions performed by various platform routing components of the cloud compute platform 200, the first VM 206 receives data packets with IPv4 header address information and the second VM 208 receives data packets with IPv6 header address information. There herein-described translations between IPv6 and IPv4 addresses are "stateful" in the sense that each address translation is performed per a methodology that facilities a corresponding reverse-direction address translation (e.g., full recovery of original address information) for traffic flowing in the opposite direction between the same two endpoints.

FIG. 2A illustrates a data flow that provides stateful address translation in a first direction that is from the second VM 208 (configured as an IPv6 endpoint) to the first VM 206 (configured as an IPv4 endpoint). Various platform routing components assist in this flow including an encapsulator 212, an SDN appliance 222, a decapsulator 242, and a stateful translator 244, the respective operations of which are described in detail below.

The cloud compute platform 200 includes a control plane interface that allows a customer to subscribe a VM with a private IP address to a particular multi-tenant service that is registered on the cloud compute platform 200, such as in the general manner described with respect to FIG. 1. During this initial subscription, the customer interacts with the control plane to elect the service of interest and to provide (either actively or passively) configuration information that is requested by the elected service, including the private IPv4 address of the VM that is subscribing to the service (the "subscribing VM"). During this process, the control plane of the cloud compute platform 200 assigns an IPv6 address to the subscribing VM. This IPv6 address is deliberately crafted by the control plane to include (e.g., embed) both a globally unique identifier for the VNet including the subscribing VM and also the IPv4 address of the subscribing VM.

In the example of FIG. 2, the first VM 206 is subscribed to the multi-tenant service 209 and has been assigned an IPv6 address, which is referred to throughout the example of FIG. 2A and 2B as "VM1_IPV6." This IPv6 address includes (e.g., either in an encoded or an unencoded format) both the IPv4 address of the first VM 206 (e.g., "VM1_IPv4") and a VNet identifier (not shown) that unique identifies the private customer VNet 211 within the cloud compute platform 200. Taken together, this VNet identifier and IPv4 address are usable to uniquely identify the first VM 206 within the cloud compute platform 200.

Following the above-described assignment of the IPv6 address to the first VM 206 (also referenced as VM1_IPv6), the cloud compute platform 200 updates a platform-maintained mapping table, shown as host mapping 224, to include an entry that associates the VNet identifier of the private customer VNet 211 and the IPv4 address of the first VM 206 (e.g., VM1_IPv4) with an IP address of the host node 202 (which is, again, a physical server operated by the cloud compute platform 200) that serves as host to the first VM 206. Following the update to the host mapping 224, the cloud compute platform 200 is configured to support service-initiated bidirectional traffic flows between the first VM 206 and the second VM 208.

At beginning of the data flow shown in FIG. 2A, the second VM 208 generates a data packet that is shown in FIG. 2A and referenced below as "original packet 210." The original packet 210 includes a data packet header that identifies VM2_IPv6 (e.g., the IPv6 address of the second VM 208) as the data packet source and VM1_IPv6 (e.g., the IPv6 address assigned to the first VM 206) as the data packet destination. The original packet 210 also includes a payload that can understood as representing the actual data (e.g., message content) being transmitted.

Although not shown, it is assumed that the cloud compute platform 200 has designated a particular IP address prefix to traffic that is to be routed between IPv6 and IPv4 endpoints. Following suit with this convention, both VM1_IPv6 and VM2_IPv2 include a particular prefix that - when present - subjects the corresponding packet to certain routing rule(s).

The original packet 210 outbound from the second VM 208 is intercepted by a the encapsulator 212, shown as residing on the host node 204. The encapsulator 212 is, in one implementation, an agent of the cloud compute platform 200 that performs routing and encapsulation operations on all traffic leaving the second VM 208 that is addressed to locations external to a VNet that includes the second VM 208. Upon receiving the original packet 210, the encapsulator 212 reads packet header information and determines that the source/destination addresses of the original packet 210 include the prefix that the cloud compute platform 200 has reserved for traffic that is traveling between IPv6 and IPv4 endpoints. The identification of this prefix within the header addresses of the original packet 210 triggers application of a platform-defined routing rule that provides for routing the data packet to a software-defined appliance (SDN appliance 222) of the cloud compute platform 200. The encapsulator 212 enforces this routing rule by attaching an outer header that includes (1) a source field 230 identifying an IP address of the host node 204 (Host2_IP) as the packet's source; and (2) a destination field 232 identifying the address of the SDN appliance 22 as the packet's destination (e.g., as shown within encapsulated packet 216, which is output by the encapsulator 212).

The encapsulated packet 216 is then directed to the SDN appliance 222. In various implementations, the SDN appliance 222 is either a hardware device or a software application that enables centralized control of network resources and policies. In one implementation, the SDN appliance 222 includes a programmable data processing unit (DPU). In another implementation, the SDN appliance 222 includes a field programmable gate array smart network interface controller (FPGA SmartNIC) running in a dedicated server. In still other implementations, the SDN appliance 222 includes software executing within a network switch or within a host node of the cloud compute platform 200.

Upon receipt of the encapsulated packet 216, the SDN appliance 222 reads the destination address in the header of the original packet 210 (e.g., VM1_IPv6) and, from this destination address, extracts the IPv4 address of the first VM 206 (e.g., "VM1_IPv4") and also extracts the VNet identifier that uniquely identifies the private customer VNet 211 in the cloud compute platform 200. By referencing the host mapping 224 based on the extracted VNet identifier and IPv4 address combination, the SDN appliance 222 is able to retrieve the IP address of the host node 202 of the first VM 206. The SDN appliance 222 updates the outer header of the encapsulated packet 216 to identify the IP address of the host node 202 ("Host1_IP") as the destination for the data packet, as shown by modified data packet 234. Once the destination field 232 of the outer header is modified in this way, the modified data packet 234 is transmitted to the IP address of the host node 202.

Upon receipt at the host node 202, the modified data packet 234 is received by a decapsulator 242, which is an agent of the cloud compute platform 200 that performs decapsulation and routing operations. The decapsulator 242 strips the outer header (e.g., by removing the source field 230 and the destination field 232), such that the original packet 210 (e.g., including the IPv6 header information) remains. The decapsulator then provides the original packet 210 to a stateful translator 244, also residing on the host node 202 in the illustrated. In other implementations, some or all actions of the stateful translator 244 performed by software components residing on hardware external to the host node 202.

The stateful translator 244 reads the source and destination header addresses (e.g., VM2_IPv6 and VM1_IPv6) of the original packet 210 and identifies the presence of the IP address prefix (described above) that is used by the cloud compute platform 200 to denote traffic in transit between IPv6 and IPv4 endpoints. Based on the detection of this prefix, the stateful translator 244 initiates stateful address translation operations that entail (1) replacing the IPv6 addresses in the header of the original packet 210 with a pair of IPv4 source/destination addresses, as described further below; and (2) defining a new stateful translation rule (among address translation rules 246) that allows return traffic along the same path to be subjected to an address translation operation that reconstructs the IPv6 source and destination addresses that are in the header of the original packet 210.

To implement action (1) above, the stateful translator 244 first replaces the source address (VM2_IPv6) in the header of the original packet 210 with a select platform communication IPv4 address that is used by the cloud compute platform 200 to facilitate communications to platform resources. In FIG. 2A-2B, this platform communication address is referred to as "Platform_IP" (e.g., as shown included in source field 250 of a final packet 248 that is ultimately received by the first VM 206). The purpose of using the Platform_IP address in source field 250 of header of the final packet 248 is to facilitate address translation for return packets traversing the same end-to-end path, as per operations that are described in detail with respect to FIG. 2B.

In addition to updating the source field 250 of the packet header to include the Platform_IP address, the stateful translator 244 also performs a stateful IPv6 to IPv4 address translation of the destination field of the original packet 210. This first entails extracting the IPv4 address of the first VM 206 (e.g., VM1_IPv4) from the IPv6 address destination address in the source field of the header of the original packet 210, such as in the manner generally described with respect to actions of the SDN appliance 222. Additionally, the stateful translation of the destination field further entails assigning a port ID to the data packet, where the assigned port ID identifies an available communication port on the virtual machine identified by the extracted IPv4 address. In this case, the stateful translator assigns an available port on the second VM 206 to the data packet and updates the destination field 252 in the header of the outgoing packet (e.g., identical to final packet 248) to include the IPv4 address of first VM 206 appended with the newly-assigned port ID. In the illustrated example, this action more specifically entails replacing the destination address "VM1_IPV6" in the original packet 210 with "VM1_IPv4 + PORT_ID," as shown by the destination field 252 in the header of the final packet 248.

The stateful translator 244 transmits the final packet 248 to the first VM 206, which is reachable via the VM1_IPv4 address. Per these operations, the final packet 248 received at the target VM includes a header referencing a pair of IPv4 addresses including (1) the VM's own IPv4 address as the packet destination and (2) an IPv4 address of the cloud compute platform 200 (e.g., "Platform_IP") that is used to communicate with routing components of the cloud compute platform 200.

In response to the above-described address translation operations, the stateful translator 244 also defines a new address translation rule (e.g., among address translation rules 246) that facilitates stateful address translation on all traffic traveling in the reverse direction between the exact same two endpoints. The newly-created address translation rule defines a specific IPv4 to IPv6 address translation of that is to be conditionally performed on data packets that include both (1) a source field in the packet header identifying the IPv4 address of the first VM 206 and the port ID assigned to that IPv4 address; and (2) a destination field in the packet header identifying the Platform_IP address.

When the stateful translator 244 subsequently-receives a return data packet that includes a packet header including header information satisfying both of the above-enumerated conditionals (1 and 2) the stateful translator 244 invokes the rule to update header information in the return data packet, thereby reconstructing the same IPv6 addresses that are included in the header of the original packet 210,with the source and destination addresses reversed (e.g., such that the outbound data packet identifies the IPv6 address of the second VM 208 as its destination and the IPv6 address of the first VM 206 as its source).

An example of the above-described stateful address translation rule is represented by the following pseudocode:

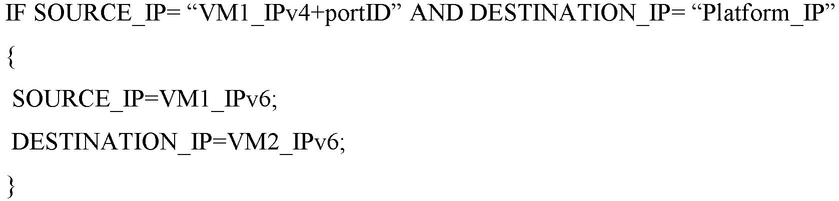

As is described below with respect to FIG. 2B, this stateful address translation rule facilitates address translation for the return traffic (e.g., from the first VM 206 to the second VM 208), allowing a pair of IPv4 addresses in the outgoing packet header to be replaced with the IPv6 addresses included in the original packet 210 (e.g., with the source and destination addresses reversed to facilitate direction of the traffic to the second VM 208).

FIG. 2B illustrates additional aspects of the cloud compute platform 200 shown in FIG. 2A. Here, routing components of the cloud compute platform 200 are shown performing address translation actions on a return packet 253 generated and transmitted by the first VM 206 in response to receipt of the final packet 248 shown (e.g., shown in FIG. 2A, above).

Various platform routing components that assist in routing and address translation for the return packet 253 include the stateful translator 244 and an encapsulator 255 (both shown to reside locally on the host node 202) as well a decapsulator 264 that shown residing on the host node 204. In response to receiving the final packet 248 (received by the first VM 206 at the end of the flow described with respect to FIG. 2A), the first VM 206 generates the return packet 253, which includes header information identifying the source and destination of the final packet 248 with respective positions versed - e.g., the source field 254 in the header of the return packet 253 identifies "VM_IPv4+Port_ID", which refers to the combination of the IPv4 address of the first VM 206 and a select port identifier, and the destination field 256 in the return packet 253 identifies "Platform_IP," which is (again) the platform-assigned address used to communicate with platform resources, as described below.

In the illustrated implementation, the host node 202 applies a rule that provides for evaluating the address translation rules 246 against all outbound traffic on the host node 202 that is addressed to the Platform_IP. In FIG. 2B, the evaluation of packet header information against the address translation rules 246 is shown as being performed by the stateful translator 244 - e.g., the software component also creates the address translation rules 246 and performs the in-bound address translations operations described with respect to FIG. 2A. Notably, however, the below-described address translation actions could performed by any agent of the cloud compute platform 200 with access to the address translation rules 246, regardless of the location of the agent. For example, the agent performing outbound address translation may be located either on the host node 202 as shown or external to the host node 202.

During evaluation of the address translation rules 246, the stateful translator 244 compares contents of the source field 254 in the header of the return packet 253 to various conditional statements defined for each of the address translation rules 246 and determines which, if any, of the rules includes a conditional statement satisfied by the contents of the source field 254 in the header of the return packet.

In the illustrated example, the stateful translator 244 identifies a rule that logically applies the pseudocode below:

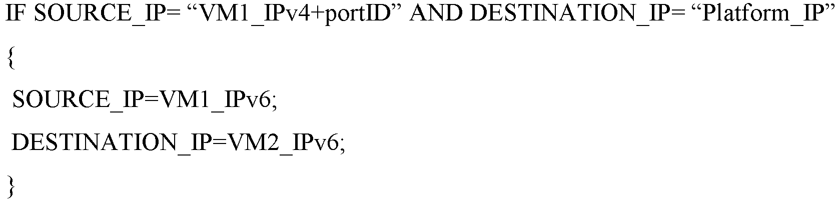

Based on this previously-stored rule and the determination that the contents of the source field 254 of the return packet 253 satisfy the "IF" statement triggering application of the rule, the stateful translator updates the source field 254 and the destination field 256 in the return packet 253 to match the stored IPv6 addresses identified by the rule. The stateful translator 244 then outputs an address-translated return packet 258 that identifies the packet source as "VMI_IPv6" and the packet destination as "VM2_IPv6." The encapsulator 255 accesses a mapping 260 (e.g., a platform-maintained mapping that is globally accessible by all platform routing components) to identify which physical host node in the cloud compute platform is host to a VM assigned to the VM2_IPv6 address identified as the packet destination. From the mapping 260, the encapsulator 255 of the host node 202 identifies an IP address of the host node 204 as "Host2_IP" and encapsulates the address-translated return packet 258 by adding an outer header 268 that identifies "Host2_IP" as the packet destination and "Host1_IP" (the IP address of the host node 202) as the packet source. The encapsulator 255 outputs encapsulated packet 262, which is transmitted to the Host1_IP address, where it is received by a decapsulator 264 that strips the outer header 268, ultimately delivering the address-translated return packet 262 to the second VM 208.

In this way, all packets received by the second VM 208 utilize the IPv6 addressing scheme.

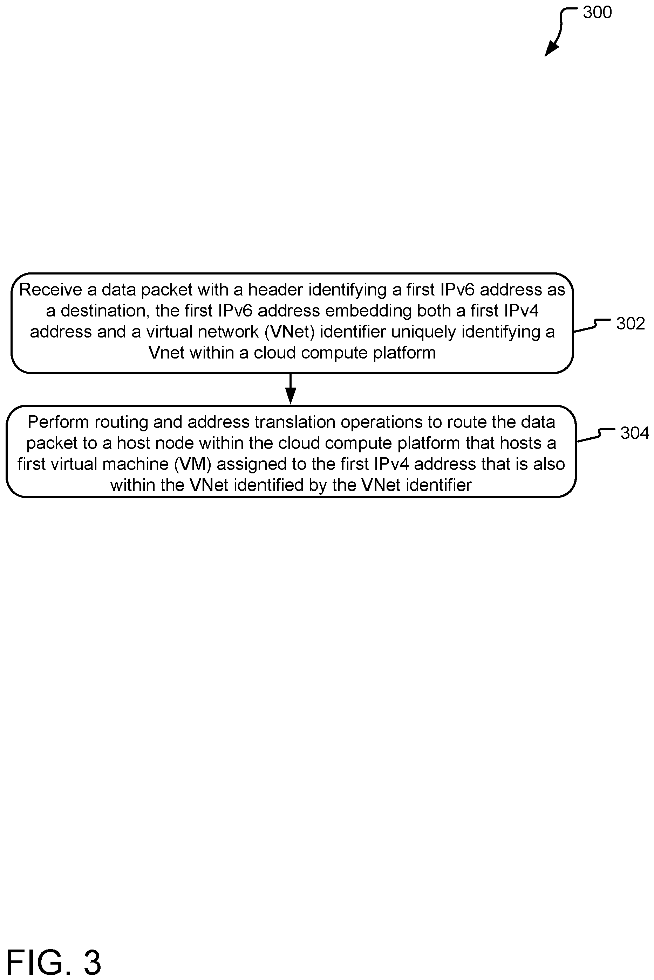

FIG. 3 illustrates example operations 300 performed to support a bidirectional traffic flow between private customer endpoints in a cloud compute platform and a multi-tenant service. The operations 300 are, in one implementation, performed by one or more routing components of the cloud compute platform. A receiving operation 302 receives a data packet with a header that identifies a first IPv6 address as a destination. In one implementation, the first IPv6 address is associated, by the cloud compute platform, with a customer VM that is reachable via a private IPv4 address. The first IPv6 address embeds the private IPv4 address and a virtual network (VNet) identifier that uniquely identifies a VNet that the customer VM belongs to. Various routing components of the cloud compute platform are configured with logic executable to extract the private IPv4 address and the VNet identifier from the first IPv6 address.

In response to the receiving operation 302 and based on information extracted from the first IPv6 address, a routing and address translation operation 304 routes the data packet to a host node within the cloud compute platform that is host to a VM reachable at the private IPv4 address within the VNet identified by the VNet identifier.

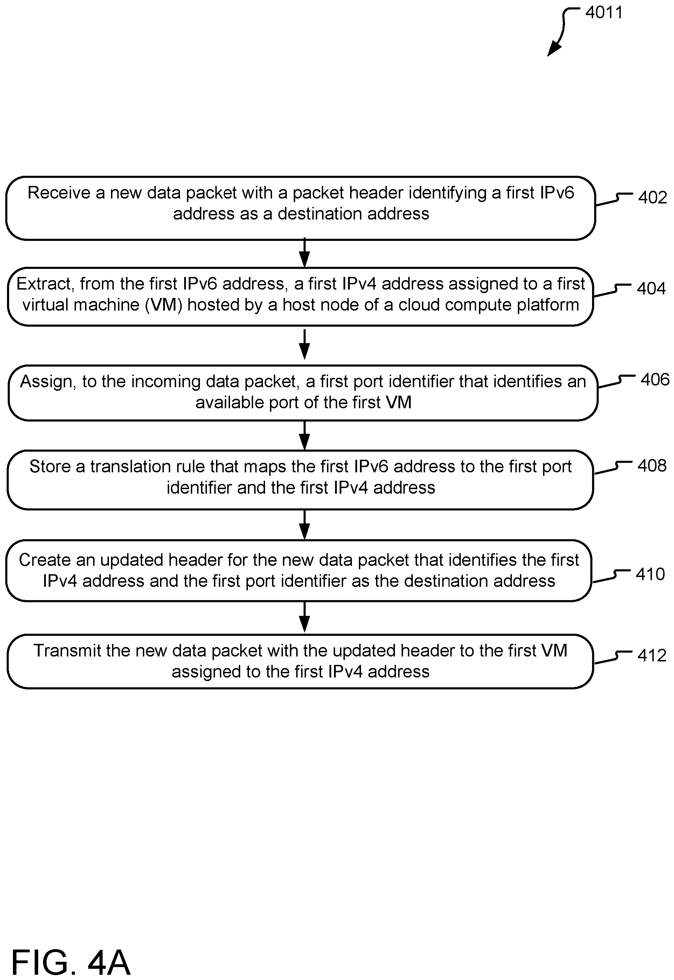

FIG 4A illustrates example operations 400 performed to facilitate a traffic flow from an IPv6 address corresponding to an endpoint of a multi-tenant service and an IPv4 address corresponding to a virtual machine of private virtual network.

The operations 400 commence when a receiving operation 402 receives a new data packet with a packet header identifying a first IPv6 address as a destination. An extraction operation 404 extracts, from the first IPv6 address, a first IPv4 address assigned to a first VM hosted by a host node of a cloud compute platform. A port assignment operation 406 identifies an available port on the first VM and assigns a first port ID for the available port to the incoming data packet. A rule creation operation 408 creates and stores a translation rule that maps the first IPv6 address to the first port identifier and the first IPv4 address. A header update operation 410 creates an updated packet header for the new data packet that identifies the first IPv4 address and the first port ID as the destination address. A transmission operation 412 transmits the data packet with the updated header to the first VM assigned to the first IPv4 address.

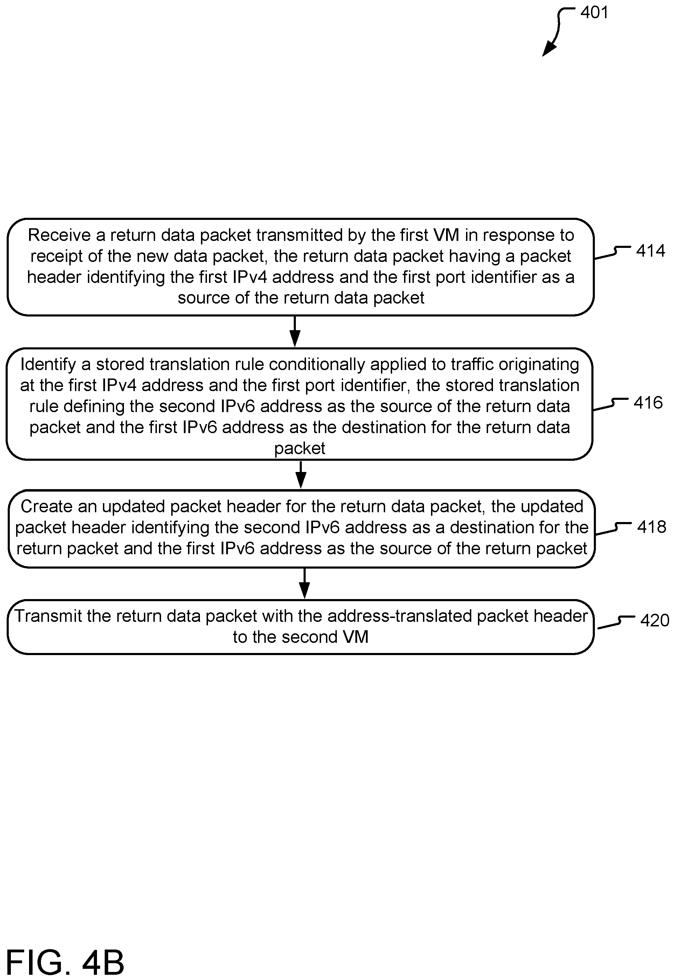

FIG 4B illustrates example operations 401 performed in response to the operations 400 of FIG. 4A in support of a return traffic flow from the first VM with private IP address to a VM of the multi-tenant service.

A receiving operation 414 receives a return data packet transmitted by the first VM in response to receipt of the new data packet (e.g., the new data packet being the packet that was transmitted to and ultimately received by the first VM in the operations 400 of FIG. 4A). The return data packet includes a packet header that identifies the first IPv4 address and the first port ID as a source. An identification operation 416 identifies a stored translation rule conditionally applied to traffic originating at the first IPv4 address and the first port identifier. The stored translation rule provides for re-defining the second IPv6 address as the source of the return data packet and the first IPv6 address as the destination for the return data packet.

Based on identification of the stored address translation rule, a packet header update operation 418 creates an updated packet header for the return data packet that identifies the second IPv6 address as a destination for the return packet and the first IPv6 address as the source of the return data packet.

A transmission operation 420 transmits the return data packet with the updated packet header to second IPv6 address, which is assigned to the second VM.

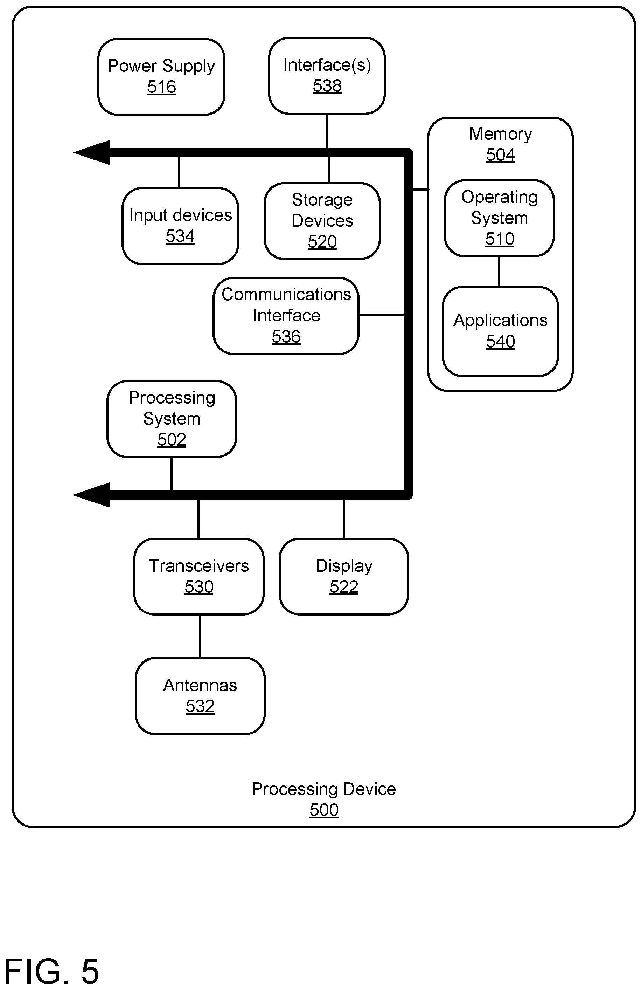

FIG. 5 illustrates an example schematic of a processing device 500 suitable for implementing aspects of the disclosed technology. The processing device 500 includes a processing system 502, memory 504, a display 522, and other interfaces 538 (e.g., buttons). The processing system 502 may include one or more computer processing units (CPUs), graphics processing units (GPUs), etc.

The memory 504 generally includes both volatile memo ry (e.g., random access memory (RAM)) and non-volatile memory (e.g., flash memory). An operating system 510, such as the Microsoft Windows^{®} operating system, the Microsoft Windows^{®} Phone operating system or a specific operating system designed for a gaming device, may reside in the memory 504 and be executed by the processing system 502, although it should be understood that other operating systems may be employed.

One or more applications 540 (e.g., any of the herein-described platform routing components of a cloud compute platform) are loaded in the memory 504 and executed on the operating system 510 by the processing system 502. In some implementations, aspects of the applications described herein loaded into memory of different processing devices connected across a network. The applications 540 may receive inputs from one another as well as from various input local devices 534 such as a microphone, input accessory (e.g., keypad, mouse, stylus, touchpad, gamepad, racing wheel, joystick), or a camera.

Additionally, the applications 540 may receive input from one or more remote devices, such as remotely-located servers or smart devices, by communicating with such devices over a wired or wireless network using more communication transceivers 530 and an antenna 532 to provide network connectivity (e.g., a mobile phone network, Wi-Fi^{®}, Bluetooth^{®}). The processing device 500 may also include one or more storage devices 520 (e.g., non-volatile storage). Other configurations may also be employed.

The processing device 500 further includes a power supply 516, which is powered by one or more batteries or other power sources and which provides power to other components of the processing device 500. The power supply 516 may also be connected to an external power source (not shown) that overrides or recharges the built-in batteries or other power sources.

The processing device 500 may include a variety of tangible computer-readable storage media and intangible computer-readable communication signals. Tangible computer-readable storage can be embodied by any available media that can be accessed by the processing device 500 and includes both volatile and nonvolatile storage media, removable and non-removable storage media. Tangible computer-readable storage media excludes intangible and transitory communications signals and includes volatile and nonvolatile, removable and non-removable storage media implemented in any method or technology for storage of information such as computer readable instructions, data structures, program modules or other data. Tangible computer-readable storage media includes RAM, read-only memory (ROM), electrically erasable programmable read-only memory (EEPROM), flash memory or other memory technology, CDROM, digital versatile disks (DVD) or other optical disk storage, magnetic cassettes, magnetic tape, magnetic disk storage or other magnetic storage devices, or any other tangible medium which can be used to store the desired information, and which can be accessed by the processing device 500. In contrast to tangible computer-readable storage media, intangible computer-readable communication signals may embody computer readable instructions, data structures, program modules or other data resident in a modulated data signal, such as a carrier wave or other signal transport mechanism. The term "modulated data signal" means a signal that has one or more of its characteristics set or changed in such a manner as to encode information in the signal. By way of example, intangible communication signals include wired media such as a wired network or direct-wired connection, and wireless media such as acoustic, radio frequency (RF), infrared and other wireless media.

In some aspects, the techniques described herein relate to a cloud compute platform that includes platform routing components configured to receive a data packet having a data packet header identifying a first IPv6 address as a destination for the data packet, the first IPv6 address embedding a first IPv4 address and a virtual network (VNet) identifier uniquely identifying a VNet of a cloud compute platform. Based on extraction of the VNet identifier and the first IPv4 address from the first IPv6 address, the platform routing components route the data packet to a host node within the cloud compute platform that hosts a first virtual machine (VM) reachable via the first IPv4 address that is within the VNet identified by the VNet identifier.

In some aspects, the techniques described herein relate to a cloud compute platform, wherein the data packet header further identifies a second IPv6 address as a source for the data packet. The platform routing components are further configured to: assign the data packet to a select port identifier on the first VM assigned to the first IPv4 address extracted from the first Ipv6 address. Based on assignment of the select port identifier, the platform routing components define an address translation rule that is conditionally applied to data packets arriving from the first IPv4 address and from the select port identifier. The address translation rule provides for an update to packet header information that designates the first IPv6 address as a source and the second IPv6 address as a destination.

In some aspects, the techniques described herein relate to a cloud compute platform and platform routing components include: a software-defined networking (SDN) appliance configured to: receive the data packet as part of an encapsulated data packet. The encapsulated data packet has an outer header and an encapsulated portion that includes the data packet header identifying the first IPv6 address as the destination of the data packet. The SDN appliance extracts, from the first IPv6 address, the VNet identifier and the first IPv4 address and uses the VNet identifier and the first IPv4 address to retrieve, from a stored mapping, an internet protocol (IP) address of a host node of the cloud compute platform that hosts a virtual machine associated with the first IPv4 address. The SDN appliance updates the outer header of the data packet to include the IP address of the host node as a new destination for the data packet; and transmits the data packet with the new destination in the outer header to the host node.

In some aspects, the techniques described herein relate to a cloud compute platform that further includes a decapsulator and a stateful translator. The decapsulator is configured to generate a modified data packet by decapsulating the encapsulated data packet and the stateful translator is configured to read the first IPv6 address and a second IPv6 address from a header of the modified data packet; extract the first IPv4 address from the first IPv6 address; select a first port identifier of the first VM to assign to the modified data packet; store a translation rule mapping the first port identifier and the first IPv4 address to a pair of addresses including the first IPv6 address and the second IPv6 address; create updated header information specifying a packet destination that identifies both the first IPv4 address and the first port identifier; and transmit the modified data packet with the updated header information to the first VM assigned to the first IPv4 address.

In some aspects, the stateful translator resides on the host node of the first VM assigned to the first IPv4 address.

In some aspects, the header of the modified data packet further identifies a second IPv6 address as a source address and the stateful translator is further configured to: replace the source address with a platform address used to communicate with components of the cloud compute platform, wherein packets received at the platform address are subject to evaluation against a set of stored translation rules including the translation rule.

In some aspects, the the second IPv6 address is assigned to virtual machine associated with a multi-tenant service and the first IPv4 address is a private IP address of a customer that subscribes to the multi-tenant service.

In some aspects, the platform routing components are further configured to: receive a return data packet transmitted by the first VM. The return data packet has a packet header identifying the first IPv4 address and the first port identifier as a source of the return data packet. The platform routing components identify a stored translation rule conditionally applied to traffic originating at the first IPv4 address and the first port identifier. The stored translation rule defines the second IPv6 address as the source of the return data packet and the first IPv6 address as the destination for the return data packet. The platform routing components create an updated header for the return data packet. The updated header identifies the second IPv6 address as a destination and the first IPv6 address as a source. The platform routing components transmit the return data packet with the updated header to the second IPv6 address.

In some aspects, the techniques described herein relate to a method that includes receiving a new data packet with a packet header identifying a first IPv6 address as a destination address. The first IPv6 address encodes a first IPv4 address assigned to a first virtual machine (VM) hosted by a host node of a cloud compute platform. The method further includes extracting the first IPv4 address from the first IPv6 address; assigning, to the new data packet, a first port identifier that identifies an available port of the first VM; based on the extracting, storing a translation rule mapping the first IPv6 address to the first port identifier and the first IPv4 address; creating an updated packet header for the new data packet that identifies the first IPv4 address and the first port identifier as the destination address; and transmitting the data packet with the updated packet header to the first VM assigned to the first IPv4 address.

In some aspects, the techniques described herein relate to a method, wherein extracting the first IPv4 address and creating the updated packet header are performed by an agent of the cloud compute platform residing on the host node of the first VM.

In some aspects, the techniques described herein relate to a method, wherein the packet header of the new data packet identifies a second IPv6 address as a source address, wherein the translation rule maps a first pair of addresses including the first IPv6 address and the second IPv6 address to the first port identifier and the first IPv4 address.

In some aspects, the techniques described herein relate to a method that further includes: receiving a return data packet transmitted by the first VM in response to receipt of the new data packet. The return data packet has a packet header identifying the first IPv4 address and the first port identifier as a source of the return data packet. The method includes identifying a stored translation rule conditionally applied to traffic originating at the first IPv4 address and the first port identifier that defines a second IPv6 address as the source of the return data packet and the first IPv6 address a destination for the return data packet. The method further includes creating an updated header for the return data packet that identifies the second IPv6 address as a destination and the first IPv6 address as a source; and transmitting the return data packet with the updated header to second IPv6 address.

In some aspects, the techniques described herein relate to a method, wherein the first IPv6 address includes a virtual network (VNet) identifier in addition to the first IPv4 address, the VNet identifier uniquely identifying a VNet including the first VM.

In some aspects, the techniques described herein relate to a method, wherein the new data packet is routed to the host node based on access to a stored mapping that associates the VNet identifier and the first IPv4 address with an IP address of the host node.

In some aspects, the techniques described herein relate to a method, wherein the second IPv6 address is assigned to virtual machine associated with a multi-tenant service and the first IPv4 address is a private IP address of a customer that subscribes to the multi-tenant service.

In some aspects, the techniques described herein relate to one or more tangible computer-readable storage media encoding computer-readable instructions for executing a computer process. The computer process includes receiving a data packet having a data packet header identifying a first IPv6 address as a destination. The first IPv6 address embeds a first IPv4 address and a virtual network (VNet) identifier uniquely identifying a VNet of a cloud compute platform. The computer process further includes routing the data packet to a host node within the cloud compute platform that hosts a virtual machine (VM) within the VNet identified by the VNet identifier and assigned to the first IPv4 address.

In some aspects, the techniques described herein relate to one or more tangible computer-readable storage media, wherein the data packet is received as part of an encapsulated data packet. The encapsulated data packet havs an outer header and an encapsulated portion that includes the data packet header identifying the first iPv6 address as the destination of the data packet, and the computer process further includes: extracting, from the first IPv6 address, the VNet identifier and the first IPv4 address; using the VNet identifier and the first IPv4 address to retrieve, from a stored mapping, an internet protocol (IP) address of a host node of the cloud compute platform that hosts a virtual machine associated with the first IPv4 address; updating the outer header of the data packet to include the IP address of the host node as a new destination for the data packet; and transmitting the data packet with the new destination in the outer header to the host node.

In some aspects, the techniques described herein relate to one or more tangible computer-readable storage media, wherein updating the outer header is performed by a software-defined appliance and the computer process further includes: forwarding the data packet to the software-defined appliance in response to determining that the first IPv6 address includes a particular prefix.

In some aspects, the techniques described herein relate to one or more tangible computer-readable storage media, wherein the data packet header identifies a second IPv6 address as a source for the data packet, and wherein the second IPv6 address corresponds to a virtual machine associated with a multi-tenant service.

In some aspects, the techniques described herein relate to one or more tangible computer-readable storage media, wherein the first IPv4 address is a private IP address of a customer that subscribes to the multi-tenant service.

In some aspects, the techniques described herein relate to a system that includes a means for receiving a new data packet with a packet header identifying a first IPv6 address as a destination address. The first IPv6 address encodes a first IPv4 address assigned to a first virtual machine (VM) hosted by a host node of a cloud compute platform. The system further includes: a means for extracting the first IPv4 address from the first IPv6 address; a means for assigning, to the new data packet, a first port identifier that identifies an available port of the first VM; a means for storing, based on the extracting, a translation rule mapping the first IPv6 address to the first port identifier and the first IPv4 address; a means for creating an updated packet header for the new data packet that identifies the first IPv4 address and the first port identifier as the destination address; and a means for transmitting the data packet with the updated packet header to the first VM assigned to the first IPv4 address.

In some aspects, the methods disclosed herein facilitate bidirectional traffic flows between a multi-tenant service and endpoints with private customer internet protocol (IP) addresses. The method provides for receiving a data packet having a data packet header identifying a first IPv6 address as a destination. The first IPv6 address embeds a first IPv4 address and a virtual network (VNet) identifier uniquely identifying a VNet of a cloud compute platform. The method further provides for routing the data packet to a host node within the cloud compute platform that hosts a virtual machine (VM) within the VNet identified by the VNet identifier and assigned to the first IPv4 address.

The logical operations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language. The above specification, examples, and data, together with the attached appendices, provide a complete description of the structure and use of example implementations.

## Claims

1. A cloud compute platform (200) (100) comprising:
platform routing components (102) configured to:
receive a data packet (262) having a data packet (262) header identifying a first IPv6 address (124a) (124) (122) as a destination for the data packet (262), the first IPv6 address (124a) (124) (122) embedding a first IPv4 address (124a) (124) (122) and a virtual network (VNet) identifier uniquely identifying a VNet of a cloud compute platform (200) (100); and
based on extraction of the VNet identifier (128) and the first IPv4 address (124a) (124) (122) from the first IPv6 address (124a) (124) (122), route the data packet (262) to a host node (204) (202) within the cloud compute platform (200) (100) that hosts a first virtual machine (VM (120)) reachable via the first IPv4 address (124a) (124) (122) that is within the VNet identified by the VNet identifier (128).

2. The cloud compute platform of claim 1, wherein the data packet header further identifies a second IPv6 address as a source for the data packet, and wherein the platform routing components are further configured to:
assign the data packet to a select port identifier on the first VM assigned to the first IPv4 address extracted from the first Ipv6 address; and
based on assignment of the select port identifier, define an address translation rule that is conditionally applied to data packets arriving from the first IPv4 address and from the select port identifier, the address translation rule providing for an update to packet header information that designates the first IPv6 address as a source and the second IPv6 address as a destination.

3. The cloud compute platform of claim 1, wherein the platform routing components include:
a software-defined networking (SDN) appliance configured to:
receive the data packet as part of an encapsulated data packet, the encapsulated data packet having an outer header and an encapsulated portion that includes the data packet header identifying the first IPv6 address as the destination of the data packet;
extract, from the first IPv6 address, the VNet identifier and the first IPv4 address;
use the VNet identifier and the first IPv4 address to retrieve, from a stored mapping, an internet protocol (IP) address of a host node of the cloud compute platform that hosts a virtual machine associated with the first IPv4 address;
update the outer header of the data packet to include the IP address of the host node as a new destination for the data packet; and
transmit the data packet with the new destination in the outer header to the host node.

4. The cloud compute platform of claim 3, further comprising:
a decapsulator configured to generate a modified data packet by decapsulating the encapsulated data packet and; and
a stateful translator configured to:
read the first IPv6 address and a second IPv6 address from a header of the modified data packet;
extract the first IPv4 address from the first IPv6 address;
select a first port identifier of the first VM to assign to the modified data packet;
store a translation rule mapping the first port identifier and the first IPv4 address to a pair of addresses including the first IPv6 address and the second IPv6 address; and
create updated header information specifying a packet destination that identifies both the first IPv4 address and the first port identifier; and
transmit the modified data packet with the updated header information to the first VM assigned to the first IPv4 address.

5. The cloud compute platform of claim 4, wherein the stateful translator resides on the host node of the first VM assigned to the first IPv4 address.

6. The cloud compute platform of claim 4 or 5, wherein the header of the modified data packet further identifies a second IPv6 address as a source address and the stateful translator is further configured to:
replace the source address with a platform address used to communicate with components of the cloud compute platform, wherein packets received at the platform address are subject to evaluation against a set of stored translation rules including the translation rule.

7. The cloud compute platform of any of claims 4-6, wherein the second IPv6 address is assigned to virtual machine associated with a multi-tenant service and the first IPv4 address is a private IP address of a customer that subscribes to the multi-tenant service.

8. The cloud compute platform of claim 5, wherein the platform routing components are further configured to:
receive a return data packet transmitted by the first VM, the return data packet having a packet header identifying the first IPv4 address and the first port identifier as a source of the return data packet;
identify a stored translation rule conditionally applied to traffic originating at the first IPv4 address and the first port identifier, the stored translation rule defining the second IPv6 address as the source of the return data packet and the first IPv6 address as the destination for the return data packet;
creating an updated header for the return data packet, the updated header identifying the second IPv6 address as a destination and the first IPv6 address as a source; and
transmit the return data packet with the updated header to the second IPv6 address.

9. A method comprising:
receiving a new data packet (262) with a packet (262) header identifying a first IPv6 address (124a) (124) (122) as a destination address (124a) (124) (122), the first IPv6 address (124a) (124) (122) encoding a first IPv4 address (124a) (124) (122) assigned to a first virtual machine (VM (120)) hosted by a host node (204) (202) of a cloud compute platform (200) (100);
extracting the first IPv4 address (124a) (124) (122) from the first IPv6 address (124a) (124) (122);
assigning, to the new data packet (262), a first port identifier that identifies an available port of the first VM (120) (206);
based on the extracting, storing a translation rule mapping (260) the first IPv6 address (124a) (124) (122) to the first port identifier and the first IPv4 address (124a) (124) (122);
creating an updated packet (262) header for the new data packet (262) that identifies the first IPv4 address (124a) (124) (122) and the first port identifier as the destination address (124a) (124) (122); and
transmitting the data packet (262) with the updated packet (262) header to the first VM (120) (206) assigned to the first IPv4 address (124a) (124) (122).

10. The method of claim 9, wherein extracting the first IPv4 address and creating the updated packet header are performed by an agent of the cloud compute platform residing on the host node of the first VM.

11. The method of claim 9, wherein the packet header of the new data packet identifies a second IPv6 address as a source address, wherein the translation rule maps a first pair of addresses including the first IPv6 address and the second IPv6 address to the first port identifier and the first IPv4 address.

12. The method of claim 9, further comprising:
receiving a return data packet transmitted by the first VM in response to receipt of the new data packet, the return data packet having a packet header identifying the first IPv4 address and the first port identifier as a source of the return data packet;
identifying a stored translation rule conditionally applied to traffic originating at the first IPv4 address and the first port identifier, the stored translation rule defining a second IPv6 address as the source of the return data packet and the first IPv6 address a destination for the return data packet;
creating an updated header for the return data packet, the updated header identifying the second IPv6 address as a destination and the first IPv6 address as a source; and
transmitting the return data packet with the updated header to second IPv6 address.

13. The method of claim 9, wherein the first IPv6 address includes a virtual network (VNet) identifier in addition to the first IPv4 address, the VNet identifier uniquely identifying a VNet including the first VM.

14. The method of claim 13, wherein the new data packet is routed to the host node based on access to a stored mapping that associates the VNet identifier and the first IPv4 address with an IP address of the host node.

15. One or more tangible computer-readable storage media encoding computer-readable instructions for executing a computer process, the computer process comprising:
receiving a data packet (262) having a data packet (262) header identifying a first IPv6 address (124a) (124) (122) as a destination, the first IPv6 address (124a) (124) (122) embedding a first IPv4 address (124a) (124) (122) and a virtual network (VNet) identifier uniquely identifying a VNet of a cloud compute platform (200) (100); and
routing the data packet (262) to a host node (204) (202) within the cloud compute platform (200) (100) that hosts a virtual machine (VM (120)) within the VNet identified by the VNet identifier (128) and assigned to the first IPv4 address (124a) (124) (122).
